Europäisches Patentamt

European Patent Office

Office européen des brevets

(19)

(11) Veröffentlichungsnummer : **0 004 580**
**B1**

(12) # EUROPÄISCHE PATENTSCHRIFT

(45) Veröffentlichungstag der Patentschrift :
15.04.81

(21) Anmeldenummer : 79100770.1

(22) Anmeldetag : 15.03.79

(51) Int. Cl.³ : **F 28 F   1/12, F 24 J   3/02,**
**F 25 B   39/00**

(54) **Wärmeaustauschelement.**

(30) Priorität : 04.04.78 DE 2814455

(43) Veröffentlichungstag der Anmeldung :
**17.10.79 (Patentblatt 79/21)**

(45) Bekanntmachung des Hinweises auf die Patenterteilung : **15.04.81 Patentblatt 81/15**

(84) Benannte Vertragsstaaten :
**BE CH FR GB IT LU NL SE**

(56) Entgegenhaltungen :
**EP - A - 0 000 369**
**CH - A - 223 394**
**DE - A - 1 652 577**
**DE - A - 2 461 249**
**DE - C - 519 945**
**FR - A - 741 113**
**FR - A - 1 527 478**
**FR - A - 2 098 338**
**FR - A - 2 324 406**
**FR - A - 2 364 075**
**GB - A - 826 625**
**US - A - 2 691 813**

(73) Patentinhaber : **ELPAG AG CHUR**
**Quaderstrasse 11**
**CH-7001 Chur (CH)**

(72) Erfinder : **Bleckmann, Ingo, Dipl.-Ing. Dr. mont.**
**Ignaz-Rieder-Kai 11**
**A-5020 Salzburg (AT)**

(74) Vertreter : **Liedl, Gerhard et al**
**Steinsdorfstrasse 21-22**
**D-8000 München 22 (DE)**

Imprimerie Jouve, 17, rue du Louvre, 75001 Paris, France

Wärmeaustauschelement

Die Erfindung bezieht sich auf ein Wärmeaustauschelement, insbesondere Bauelement, für eine Wärmepumpenheizungsanlage oder eine Solarheizungsanlage oder für eine Verdampferanlage, bestehend aus einem Leitungsrohrsystem zur Führung eines oder mehrerer flüssiger oder gasförmiger Wärmeaustauschmedien und aus einem Tragblech, auf welchem die Rohre mittels einer Drahtkaltverbindung wärmeleitend befestigt sind.

Aus der DE-A-2 461 249 ist ein Wärmeaustauschelement bekannt geworden, welches aus einem elektrischen Rohrheizkörper besteht, auf dessen Mantelfläche ein Draht wendelförmig aufgewickelt ist. Zur Befestigung des Rohrheizkörpers auf dem Tragblech werden die an dem Tragblech anliegenden Kuppen der Drahtwendel in dasselbe eingepreßt. Aus der vorgenannten Druckschrift ist weiterhin ein Leitungssystem für Kühl-oder Wärmemedien bekannt geworden, bei welchem eine Blechplatte, welche rillenförmige Vertiefungen trägt, mit einer anderen Blechplatte mittels Drahtwendeln verbunden sind, die hier die Funktion von Verbindungsgliedern haben.

Bei der zuerst genannten Lösung handelt es sich nicht um Rohre, die von einem flüssigen oder gasförmigen Wärmeaustauschmedium durchströmt werden, sondern um Rohrheizkörper, die mit einem entsprechend verdichteten Isoliermaterial, im allgemeinen Magnesiumoxid, gefüllt sind. Dadurch kann der zum Aufpressen des Rohrheizkörpers auf das Tragblech benötigte Preßdruck ohne weiteres übertragen werden. Bei Hohlrohren, wie sie für die genannten Wärmeaustauschelemente benötigt werden, ergeben sich jedoch andere Voraussetzungen. Insbesondere bei dünnwandigen Rohre, wie sie für den in Rede stehenden Zweck verwendet werden, müssen besondere Vorkehrungen getroffen werden, damit eine undefinierte Verformung des Rohres vermieden wird.

Bei der an zweiter Stelle genannten Lösung müssen zwei Bleche verwendet werden, wobei in eines der Bleche entsprechende Vertiefungen eingeformt werden müssen. Es werden zwar Kanäle gebildet, die zur Führung eines Wärmeaustauschmediums geeignet sind. Da jedoch keine Rohre verwendet werden, ergeben sich entsprechende Schwierigkeiten beim Anschluß der Kanäle an ein entsprechendes Rohrsystem.

Wärmeaustauschelemente werden beispielsweise zur Wärmegewinnung bei Solarheizungsanlagen, zur Wärmespeicherung, z.B. im Erdboden, für Heizzwecke, z.B. bei Fußbodenheizungen, und zu Kühlzwecken, z.B. bei Verdampfern, verwendet. Sie bestehen im allgemeinen aus Tragblechen oder ähnlichen Tragkonstruktionen, mit welchen ein Leitungsrohrsystem bildende Rohre verbunden sind. Die Verbindung kann beispielsweise durch Löten oder Schweißen erfolgen. Dieser Arbeitsgang ist jedoch relativ kostspielig und auf eine bestimmte Materialauswahl beschränkt. Bei Aluminium, welches sich aufgrund seiner guten Wärmeleitfähigkeit und aufgrund seiner Korrosionsbeständigkeit gegebenenfalls in Form entsprechender Legierungen besonders gut eignet, sind derartige Schweiß- oder Lötarbeiten im allgemeinen schwierig. Bei anderen Lösungen werden an das Tragblech Klammern angeschweißt, in die die Rohre eingeklemmt werden. Diese Lösungen haben den Nachteil, daß der Wärmeübergang über die Klammern auf das Rohr sehr schlecht ist. Außerdem erfordert das Anbringen der Klammern auch einen erheblichen Arbeitsaufwand.

Der Erfindung liegt die Aufgabe zugrunde, ein Wärmeaustauschelement der in Rede stehenden Art zu schaffen, bei dem ein Anbringen von hohlen Rohren an den Tragblechen oder anderen Tragkonstruktionen durch kaltes Aufpressen ermöglicht wird, ohne daß die Rohre durch den Preßdruck undefiniert verformt werden. Die Lösung dieser Aufgabe ergibt sich aus den Merkmalen des Anspruchs 1. Weiterbildungen der Erfindung ergeben sich aus den Unteransprüchen.

Die Beiliegenden Zeichnungen dienen der weiteren Erläuterung der Erfindung anhand bevorzugter Ausführungsformen. Es zeigen :

Fig. 1 schaubildlich eine Ausführungsform, bei der zur Befestigung eines Rohres ein Drahtgitter dient ;

Fig. 2 eine Seitenansicht der Ausführungsform gemäß Fig. 1 ;

Fig. 3 schaubildlich eine Ausführungsform, bei der zwei Rohre in satter Anlage an einem Tragblech befestigt sind und

Fig. 4 die Verbindung zweier Anschlußenden der Rohre mittels einer Muffe.

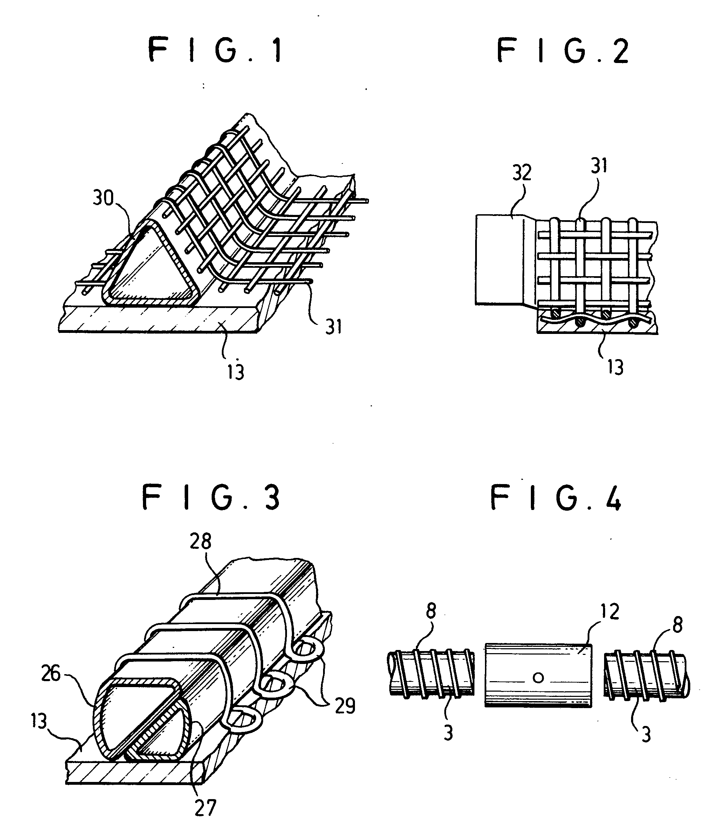

Bei der in Fig. 1 dargestellten Ausführungsform dient zur Befestigung eines Rohres 30 an einem Tragblech 13 ein Gitter 31. Durch Verwendung eines entsprechenden Preßgesenkes wird das Rohr 30 in eine Dreiecksform umgepreßt, was den Vorteil hat, daß das Rohr 30 eine größere wärmeleitende Verbindungsfläche zum Tragblech 13 erhält. Gleichzeitig werden die Drähte des Gitters 31 in das Tragblech 13 so eingepreßt, daß sie sich im Material desselben verankern, wie dies in Fig. 2 dargestellt ist. Das Anschlußende 32 des Rohres 30 bleibt unverpreßt, d.h. behält seinen runden Querschnitt, so daß ein Anschluß an andere runde Rohre oder Schläuche erleichtert wird.

Fig. 3 zeigt, daß auch mehrere Rohre, nämlich die Rohre 26 und 27, an dem Tragblech 13 befestigt werden können. Das Rohr 26 kann dabei beispielsweise zur Führung eines flüssigen Wärmeaustauschmediums vorgesehen werden, während das Rohr 27 in einem Verdampfer-Kondensator-Kreislauf liegt. Je nach Außentemperatur und benötigter Heizleistung kann dann der eine oder der andere Kreislauf zur Wärmegewinnung herangezogen werden. Ebenso ist es bei dieser Ausführungsform möglich, durch die Rohre 26 und 27 gasförmige oder flüssige Wärmeaustauschmedien im Gegenstrom laufen zu lassen, wodurch die Wärmegewinnung verbessert werden kann.

Zur Befestigung der Rohre 26 und 27 dient eine Drahtwendel 28, welche einen größeren Durchmesser hat als die beiden aneinandergelegten Rohre. Wird nun mit einem Preßgesenk oder mit einem Preßstempel, der eine im Querschnitt U-förmige Vertiefung hat, die Anordnung auf das Tragblech 13 aufgepreßt, dann werden die beiden aneinandergelegten Rohre in den dargestellten dreieckförmigen Querschnitt in satte Anlage aneinander verpreßt. Gleichzeitig werden, ohne daß besondere Vorkehrungen getroffen werden, aus der Drahtwendel 28 Fußschlaufen 29 ausgepreßt, die sich in dem Material des Tragbleches 13 verankern.

Ein auf ein Rohr 3 unter Vorspannung aufgewickelter und mit diesem durch Lötung verbundener Draht 8 wirkt, wie Fig. 4 veranschaulicht, wie ein Schraubgewinde. Die Anschlußenden der Rohre können miteinander oder mit Zu- oder Ableitungen durch Gewindemuffen 12 verbunden werden, welche vorzugsweise ein gegenläufiges Innengewinde besitzen, d.h. in die eine Hälfte der Muffe 12 ist beispielsweise ein linksdrehendes und in die andere Hälfte ein rechtsdrehendes Innengewinde eingearbeitet. Durch Drehen der Muffe 12 in einer Richtung werden dementsprechend die Rohrenden in die Muffe 12 eingezogen und flüssigkeitsdicht miteinander verbunden. Hieraus ergibt sich eine sehr einfache und sehr wirksame Verbindung, die zudem noch bedeutend sicherer ist als andere bekannte Verbindungsmethoden. Es können jedoch an die Rohre auch Schläuche angeschlossen werden, wobei sich der wesentliche Vorteil ergibt, daß beim Anziehen eines Schlauchbinders das Material des Schlauches in die Zwischenräume zwischen den einzelnen Drahtwicklungen eingepreßt wird, wodurch die Abdichtung verbessert und ein Abrutschen des Schlauches völlig ausgeschlossen wird.

## Ansprüche

1. Wärmeaustauschelement, insbesondere Bauelement, für eine Wärmepumpenheizungsanlage oder eine Solarheizungsanlage oder für eine Verdampferanlage, bestehend aus einem Leitungsrohrsystem zur Führung eines oder mehrerer flüssiger oder gasförmiger Wärmeaustauschmedien und aus einem Tragblech (13), auf welchem die Rohre (26, 27, 30) mittels einer Drahtkaltverbindung wärmeleitend befestigt sind, dadurch gekennzeichnet, daß ein Drahtgebilde (28, 31) mit mindestens einer Schar parallel verlaufender Drähte, welche das Rohr (26, 27, 30) umgreifen, mit seinen Randbereichen in die neben dem Rohr liegenden Bereiche des Tragbleches (13) eingedrückt ist.

2. Wärmeaustauschelement nach Anspruch 1, dadurch gekennzeichnet, daß das Drahtgebilde (31) ein Drahtgitter ist.

3. Wärmeaustauschelement nach Anspruch 1 oder 2, dadurch gekennzeichnet, daß auf die über das Tragblech (13) hinausgehenden Enden des Rohres (3) ein Draht (8) unter Vorspannung wendelförmig aufgewickelt und mit demselben verlötet oder verschweißt ist, wobei der aufgewickelte Draht (8) ein Außengewinde bildet, das zum Anschluß der Rohre an die Zu- und Ableitungen oder zur Verbindung der Rohre (3) untereinander dient.

4. Wärmeaustauschelement nach Anspruch 3, dadurch gekennzeichnet, daß zur Verbindung der Rohre (3) untereinander oder mit den Zu- und Ableitungen eine Gewindemuffe (12) mit gegenläufigem Innengewinde dient.

## Claims

1. A heat exchange element, in particular a construction element, for a heat pump heating plant or a solar heating plant or an evaporator plant, consisting of a system of pipelines for conducting one or more liquid or gaseous heat exchange media and a supporting sheet (13) on to which the pipes (26, 27, 30) are secured so as to be heat conducting by means of a cold wire-joint, characterised in that a wire structure (28, 31) having a least one set of wires extending in parallel and embracing the pipe (26, 27, 30) has its edge portions pressed into the portions of the supporting sheet (13) adjacent to the pipe.

2. A heat exchange element according to claim 1, characterised in that the wire structure (31) is a wire lattice.

3. A heat exchange element according to claim 1 or 2, characterised in that a wire (8) is wound helically under tension onto the ends of the pipe (3) projecting beyond the supporting plate (13) and is soldered or welded thereto, wherein the wound wire (8) forms an outer thread serving to connect the pipes to the inflow and outflow lines or to interconnect the pipes (3).

4. A heat exchange element according to claim 3, characterised in that a threaded sleeve (12) having an inner counter-thread serves to connect the pipes (3) to each other or to the inflow and outflow lines.

## Revendications

1. Elément d'échange de chaleur, notamment élément de construction pour une installation de chauffage à pompes à chaleur, une installation de chauffage solaire, ou une installation d'évaporation, constitué par un système de tubulures pour guider un ou plusieurs milieux d'échange de chaleur liquides ou gazeux et par une plaque support en tôle (13) sur laquelle les tubes (26, 27, 30) sont fixés, en assurant la conduction de la chaleur, au moyen d'une liaison à froid par fil métallique, *caractérisé en ce qu'*une structure en fil métallique (28, 31) comportant au moins un assemblage de fils parallèles entourant le tube (26, 27, 30) est enfoncée par pression par des zones de bords dans les zones de la plaque support en tôle (13) situées à côté du tube.

2. Elément selon la revendication 1, *caractérisé en ce que* la structure en fil métallique (31) est un treillis.

3. Elément selon la revendication 1 ou 2, *caractérisé en ce que* sur les extrémités du tube (3) dépassant au-delà de la plaque support (13), est enroulé en spirale et avec précontrainte, un fil métallique (8) qui est brasé ou soudé avec le tube, le fil (8) constituant un filetage extérieur qui sert à raccorder les tubes aux canalisations d'arrivée et d'évacuation ou à relier ensemble les tubes (3).

4. Elément selon la revendication 3, *caractérisé en ce qu'*on utilise pour relier les tubes (3) entre eux ou à des canalisations d'arrivée et d'évacuation un manchon fileté (12) avec deux filetages intérieurs à pas opposés.

# F I G . 1

# F I G . 2

# F I G . 3

# F I G . 4